# EUROPEAN PATENT SPECIFICATION

(11) **EP 3 821 995 B1**
(45) Date of publication and mention of the grant of the patent: **23.08.2023**
(21) Application number: 20207321.9
(22) Date of filing: 12.11.2020
(51) Int. Cl.: B21B 39/24, B65G 47/244, B21B 1/06, B21B 38/00, B21B 39/22, B21B 39/12

(54) **ROLLING MILL AREA PRODUCTION EQUIPMENT WITH LASER LINEATION POSITIONING DEVICE, AND HOT ROLLING PRODUCTION LINE**
PRODUKTIONSAUSRÜSTUNG IM WALZWERKBEREICH MIT LASERLINIENPOSITIONIERVORRICHTUNG UND WARMWALZPRODUKTIONSLINIE
ÉQUIPEMENT DE PRODUCTION DE ZONE DE LAMINOIR DOTÉ D'UN DISPOSITIF DE POSITIONNEMENT DE LINÉATION LASER ET LIGNE DE PRODUCTION DE LAMINAGE À CHAUD

(30) Priority: 12.11.2019 CN 201911099055
(43) Date of publication of application: 19.05.2021
(73) Proprietor: MCC Capital Engineering & Research Incorporation Limited, 100176 Beijing (CN); CERI Technology Company Limited, 100176 Beijing (CN)
(72) Inventor: REN, Jijun, 100176 Beijing (CN); CAO, Jianning, 100176 Beijing (CN); HAN, Wen, 100176 Beijing (CN); ZHOU, Xikang, 100176 Beijing (CN); ZHOU, Yating, 100176 Beijing (CN); FU, Bin, 100176 Beijing (CN); BAI, Bing, 100176 Beijing (CN); LIU, Yanjun, 100176 Beijing (CN)
(74) Representative: Slingsby Partners LLP

(56) References cited:
- WO-A1-2009/142064
- JP-A- 2007 216 278
- KR-B1- 100 946 103

## Description

### TECHNICAL FIELD

The present disclosure relates to the technical field of hot rolling mills, and in particular to a rolling mill area production equipment with a laser lineation positioning device, and a hot rolling production line.

### BACKGROUND

In recent years, with the rapid improvement of the production capacity of medium and heavy plates in China, the output of medium and heavy plates has greatly increased, and the market competition has become increasingly fierce. How to expand the rollingable specification range of slabs, improve the productivity and increase the yield of steel plates has become the focus and difficulty in this field.

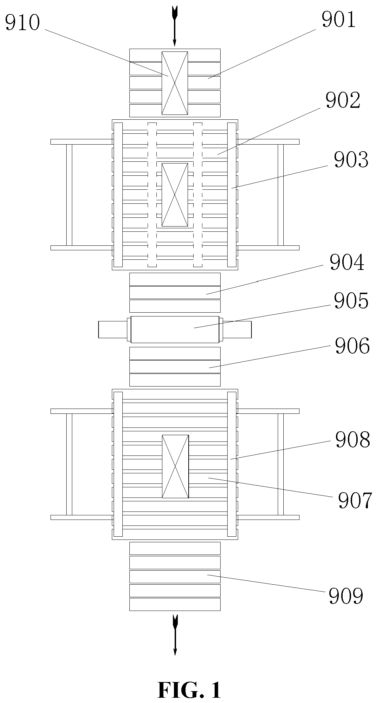

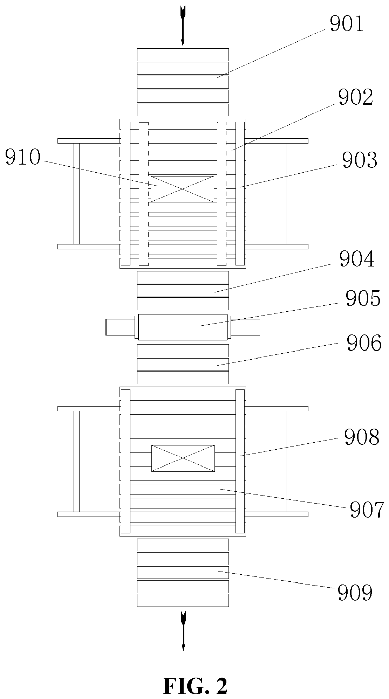

At present, as illustrated in FIGs. 1 and 2, the conventional production line in the rolling mill area sequentially comprises an entry side conveying roller table 901, an entry side rotary roller table 902, an entry side feed roller 904, a mill roll 905, an exit side feed roller 906, an exit side rotary roller table 907 and an exit side conveying roller table 909 from upstream to downstream. Entry side guides are respectively disposed on two sides of the entry side rotary roller table 902, and entry side pushing plates 903 are disposed on the entry side guides. Exit side guides are respectively disposed on two sides of the exit side rotary roller table 907, and exit side pushing plates 908 are disposed on the exit side guide. During the rolling process of the medium and heavy plates, a rolling piece 910 is adjusted by the entry side rotary roller table 902 to a preset angle, and then subjected to forward rolling by the mill roll 905 after angle adjustment; the rolling piece 910 after the forward rolling is adjusted by the exit side rotary roller table 907 to a preset angle again, and then is subjected to backward rolling by the mill roll 905 after angle adjustment. The rolling piece 910 can be directly output or subjected to the subsequent conventional longitudinal rolling after multiple times of forward and reverse angular rolling productions according to the requirements of the production process.

However, in the existing conventional production line, the preset angle of the rolling piece 910 is adjusted only by the cooperation of the side guides disposed on two sides of the production line, which not only leads to a slow reaction speed and a long time to adjust the preset angle of the rolling piece 910, but also disables the workers to intuitively and accurately acquire whether the rotation angle of the rolling piece 910 meets the preset requirements after the preset angle of the rolling piece 910 is adjusted. Therefore, there will be a certain error in the rotation preset angle of the rolling piece 910, which is not conducive to the improvement of the production efficiency.

Regarding the problems of slow speed and low accuracy in the adjustment of the preset angle of the rolling piece by the rolling mill in related arts, no effective solution has been proposed yet.

Therefore, based on years of experiences and practices in related industries, the inventors of the present application propose a rolling mill area production equipment with a laser lineation positioning device, and a hot rolling production line, so as to overcome the defects of the prior art.

Document WO2009/142064A1 discloses a method and system for controlling a slab turning device. A method of controlling a slab turning device is used in a rolling line having a rolling mill for rolling a slab heated in a heating furnace. While a preceding slab is being rolled by the rolling mill, the slab turning device holds, lifts, and turns, on the upstream of the rolling mill, a following slab by using holding members of a tongue mechanism system which have holding claws at four corners of a horizontal base. The holding claws at the front ends of the holding members are closed, with a turning section, which supports the holding members of the slab turning device, made to be freely turnable. Force of the closing of the holding claws allows the turning section to freely turn to the same angle as the inclination angle of the slab, and this causes all the holding claws to be in contact with side surfaces of the slab. After that, the side surfaces of the slab are held by the holding claws of the tongue mechanism. By this, the slab can be stably lifted before being loaded into the rolling mill. Thus, the slab can be stably lifted during a slab turning process before being loaded into the rolling mill, and the turning process can be automated.

### SUMMARY

An object of the present invention is to provide a rolling mill area production equipment with a laser lineation positioning device, and a hot rolling production line. Laser lineation positioning devices disposed on an entry side rotary roller table and an exit side rotary roller table calibrate a preset angle of a rolling piece, and it is detected in real time whether the preset angle of the rolling piece meets a preset standard through emitted laser during the rolling process, which facilitates a timely adjustment of an angle of the rolling piece, and contributes to improving the production rhythm and the production efficiency.

The object of the present invention is achieved by adopting the following technical solutions.

The present invention provides a rolling mill area production equipment with a laser lineation positioning device, comprising: a laser lineation positioning device and a rotary roller table, wherein the laser lineation positioning device is able to calibrate a preset angle of a rolling piece through laser light rays emitted outwards, so that the preset angle is formed between a center line of the rolling piece and a rolling center line, wherein the laser lineation positioning device is disposed above the rotary roller table and is able to transversely move on a corresponding rotary roller table, and the rotary roller table is configured to drive the rolling piece to rotate to the preset angle, wherein the rotary roller table comprises an entry side rotary roller table and an exit side rotary roller table, there are at least two sets of the laser lineation positioning devices, two sets of the laser lineation positioning devices are correspondingly disposed on the entry side rotary roller table and the exit side rotary roller table, and a mill roll is disposed between the entry side rotary roller table and the exit side rotary roller table, wherein the entry side rotary roller table and the exit side rotary roller table are both composed of a plurality of first roller tables disposed side by side in a horizontal direction, each of the first roller tables is connected to a first roller table motor, and adjacent first roller table motors can drive corresponding first roller tables to rotate in a same direction or in opposite directions.

In a preferred embodiment of the present invention, the laser lineation positioning device comprises a laser emitter, a rotation assembly, a traverse assembly and a mounting frame, wherein the mounting frame is fixedly disposed above the rotary roller table, the traverse assembly is disposed at a top portion of the mounting frame, the rotation assembly is movably disposed at a bottom portion of the traverse assembly along the traverse assembly, a mounting rod is disposed below the rotation assembly, a top end of the mounting rod is connected to a bottom portion of the rotation assembly, a bottom end of the mounting rod extends towards the rotary roller table, and the laser emitter is rotatably disposed on the mounting rod.

In a preferred embodiment of the present invention, the laser lineation positioning device further comprises a grating emitter which is rotatably disposed on the mounting rod and located below the laser emitter.

In a preferred embodiment of the present invention, the mounting frame comprises a connection bracket, and two stand columns respectively disposed on two sides of the rotary roller table, wherein bottom ends of the stand columns are fixed on a mounting plane, top ends of the stand columns are connected to two ends of the connection bracket, respectively, and the traverse assembly is disposed on the connection bracket.

In a preferred embodiment of the present invention, the traverse assembly comprises a guidance moving component and a first drive motor, wherein the guidance moving component is disposed on the connection bracket in a horizontal direction, a bearing is disposed between each of two sides of the guidance moving component close to an end portion thereof and the connection bracket, one end of the guidance moving component is connected to an output shaft of the first drive motor through a coupling, and the other end of the guidance moving component is connected to a first encoder.

In a preferred embodiment of the present invention, the connection bracket is a cylindrical structure disposed in a horizontal direction, and the guidance moving component is disposed inside the connection bracket.

In a preferred embodiment of the present invention, the guidance moving component is a lead screw structure sleeved with a nut, or a ball lead screw pair.

In a preferred embodiment of the present invention, the traverse assembly further comprises a first housing and a connection frame, wherein the first housing movably sleeves the guidance moving component, a top portion of the connection frame is connected to a bottom portion of the first housing, and the rotation assembly is disposed at a bottom portion of the connection frame.

In a preferred embodiment of the present invention, the rotation assembly comprises a second housing, a driving component and a driven component, both of the driving component and the driven component are disposed in the second housing, wherein
the driving component comprises a driving shaft, a driving gear and a second drive motor, wherein the driving shaft is disposed in a vertical direction, a bottom end of the driving shaft is connected to an output shaft of the second drive motor, and the driving gear fixedly sleeves the driving shaft;
the driven component comprises a driven shaft and a driven gear, wherein the driven shaft is disposed in parallel with the driving shaft, the driven gear fixedly sleeves the driven shaft, the driven gear meshes with the driving gear, and a bottom end of the driven shaft is connected to a top end of the mounting rod.

In a preferred embodiment of the present disclosure, the second drive motor is connected to a second encoder.

In a preferred embodiment of the present invention, a first positioning flat key is disposed between the driving shaft and the driving gear, and a second positioning flat key is disposed between the driven shaft and the driven gear.

In a preferred embodiment of the present invention, a first upper bearing and a first lower bearing are respectively disposed between top and bottom ends of the driving shaft and the second housing; and a second upper bearing and a second lower bearing are respectively disposed between top and bottom ends of the driven shaft and the second housing.

In a preferred embodiment of the present invention, an entry side feed roller is disposed between an output end of the entry side rotary roller table and the mill roll, and an exit side feed roller is disposed between the mill roll and an input end of the exit side rotary roller table.

In a preferred embodiment of the present invention, the entry side feed roller and the exit side feed roller are both composed of a plurality of second roller tables disposed side by side in a horizontal direction, one side of each of the second roller tables is provided with a second roller table motor by which the second roller table is driven to rotate.

In a preferred embodiment of the present invention, the rolling mill area production equipment with a laser lineation positioning device further comprises an entry side conveying roller table and an exit side conveying roller table, wherein an output end of the entry side conveying roller table is connected to an input end of the entry side rotary roller table, and an input end of the exit side conveying roller table is connected to an output end of the exit side rotary roller table.

In a preferred embodiment of the present invention, the entry side conveying roller table and the exit side conveying roller table are both composed of a plurality of third roller tables disposed side by side in a horizontal direction, one side of each of the third roller tables is provided with a third roller table motor by which the third roller table is driven to rotate.

The present invention provides a hot rolling production line, comprising a rolling mill mounting area, wherein the rolling mill mounting area is provided therein with the above rolling mill area production equipment with the laser lineation positioning device.

In a preferred embodiment of the present disclosure, the rolling mill mounting area is a single-feed rolling mill area provided therein with the rolling mill area production equipment with the laser lineation positioning device.

In a preferred embodiment of the present invention, the rolling mill mounting area comprises a rough rolling mill area and a finishing rolling mill area, an output end of the rough rolling mill area is connected to an input end of the finishing rolling mill area, and the rough rolling mill area and/or the finishing rolling mill area is provided therein with the rolling mill area production equipment with the laser lineation positioning device.

In view of the above, the characteristics and advantages of the rolling mill area production equipment with the laser lineation positioning device and the hot rolling production line according to the present disclosure are as follows. The laser lineation positioning devices capable of emitting laser light rays to position the preset angle of the rolling piece are disposed on the entry side rotary roller table and the exit side rotary roller table, respectively, in the hot rolling production line. The preset angle of the rolling piece is pre-calibrated through the laser light rays emitted by the laser lineation positioning devices when the rolling piece passes through the entry side rotary roller table and the exit side rotary roller table. When the rolling piece passes through such position, an operator can intuitively observe whether the preset angle of the rolling piece reaches a preset standard, which facilitates a timely and accurate adjustment of the preset angle of the rolling piece, meets the requirement of the setting direction of the rolling piece, shortens the adjustment time of the angle of the rolling piece, avoids any collision and impact between the rolling piece and other components during the setting of the inclination angle, and greatly improves the production rhythm and the production efficiency.

### BRIEF DESCRIPTION OF DRAWINGS

The following drawings are only intended to schematically illustrate and explain the present disclosure, rather than limiting the scope of the present disclosure. In which:
FIG. 1 is a schematic structural view of a rolling mill production line in the prior art for longitudinally rolling a rolling piece;
FIG. 2 is a schematic structural view of a rolling mill production line in the prior art for horizontally rolling a rolling piece;
FIG. 3 is a schematic structural view of a rolling mill area production equipment with a laser lineation positioning device according to the present disclosure;
FIG. 4 is a schematic structural view of a laser lineation positioning device in a rolling mill area production equipment with the laser lineation positioning device according to the present disclosure;
FIG. 5 is a partial enlarged view of position A in FIG. 4;
FIG. 6 is a cross-sectional view taken along direction B-B in FIG. 4; and
FIG. 7 is a partial enlarged view of a position of a rotation assembly in FIG. 6.

### Reference numbers in the prior art:

901: entry side conveying roller table; 902: entry side rotary roller table; 903: entry side pushing plate; 904: entry side feed roller; 905: mill roll; 906: exit side feed roller; 907: exit side rotary roller table; 908: exit side pushing plate; 909: exit side conveying roller table; and 910: rolling piece.

### Reference numbers in the present disclosure:

1: entry side rotary roller table; 2: mill roll ; 3: exit side rotary roller table; 4: entry side conveying roller table; 5: entry side feed roller; 6: exit side feed roller; 7: exit side conveying roller table; 8: entry side guide; 811: entry side pushing plate; 9: exit side guide; 911: exit side pushing plate; 10: rolling piece; 11: laser lineation positioning device; 111: laser emitter; 112: rotation assembly; 1121: second housing; 1122: driving component; 11221: driving shaft; 11222: second drive motor; 11223: second encoder; 11224: driving gear; 11225: first positioning flat key; 11226: first upper bearing; 11227: first lower bearing; 1123: driven component; 11231: driven shaft; 11232: driven gear; 11233: second positioning flat key; 11234: second upper bearing; 11235: second lower bearing; 113: traverse assembly; 1131: guidance moving component; 1132: first drive motor; 1133: first encoder; 1134: coupling; 1135: nut; 1136: first housing; 1137: connection frame; 114: mounting frame; 1141: connection bracket; 1142: stand column; 115: mounting rod; 116: grating emitter; and 12: rotary roller table.

### DETAILED DESCRIPTION

In order to have clearer understanding of the technical features, objects and effects of the present disclosure, the specific embodiments of the present disclosure will now be described with reference to the drawings.

### Embodiment 1

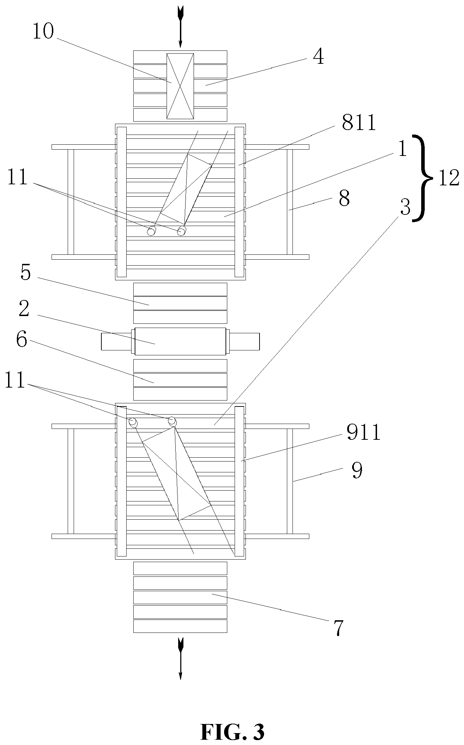

As illustrated in FIG. 3, the present disclosure provides a rolling mill area production equipment with a laser lineation positioning device, comprising: a laser lineation positioning device 11 and a rotary roller table 12, wherein the laser lineation positioning device 11 can position a rolling piece 10 through laser light rays emitted outwards so that a preset angle is formed between a center line of the rolling piece 10 and a rolling center line, the laser lineation positioning device 11 is disposed above the rotary roller table 12 and can transversely move on the corresponding rotary roller table 12, and the rotary roller table drives the rolling piece 10 to rotate to the preset angle. According to the present disclosure, the laser lineation positioning device 11 capable of emitting laser light rays to position the preset angle of the rolling piece 10 is disposed on the rotary roller table 12 of the hot rolling production line. The preset angle formed by the center line of the rolling piece 10 and the rolling center line is pre-calibrated through the laser light rays emitted by the laser lineation positioning device 11 when the rolling piece 10 passes through the rotary roller table 12. When the rolling piece 10 passes through such position, an operator can intuitively observe whether the preset angle of the rolling piece reaches a preset standard, which facilitates the timely and accurate adjustment of the preset angle of the rolling piece 10, meets the requirement of the setting direction of the rolling piece 10, shortens the adjustment time of the angle of the rolling piece 10, avoids any collision and impact between the rolling piece 10 and other components during the setting of the inclination angle, and greatly improves the production rhythm and the production efficiency.

In which, the rolling mill area production equipment with the laser lineation positioning device further comprises conventional devices such as a plurality of conveying roller tables, a side guide, a feed roller and a rolling mill, which cooperate with the laser lineation positioning device 11 and the rotary roller table 12 to finish rolling of the rolling piece 10.

Specifically, as illustrated in FIG. 3, the rotary roller table 12 comprises an entry side rotary roller table 1, a mill roll 2 and an exit side rotary roller table 3. There are at least two sets of laser lineation positioning devices 11. Two sets of laser lineation positioning devices 11 are correspondingly disposed on the entry side rotary roller table 1 and the exit side rotary roller table 3. The mill roll 2 is disposed between an output end of the entry side rotary roller table 1 and an input end of the exit side rotary roller table 3. The respective laser lineation positioning devices 11 are correspondingly disposed on the entry side rotary roller table 1 and the exit side rotary roller table 3, and can transversely move thereon, so as to be adaptive to a position of the rolling piece 10. The laser lineation positioning device 11 positions a preset angle of the rolling piece 10 through laser light rays emitted outwards. The entry side rotary roller table 1 and the exit side rotary roller table 3 of the hot rolling production line are respectively provided with the laser lineation positioning device 11 capable of emitting laser light rays to position a preset angle of the rolling piece 10. When the rolling piece 10 passes through the entry side rotary roller table 1 and the exit side rotary roller table 3, the preset angle of the rolling piece 10 can be pre-calibrated by the laser lineation positioning device 11 to improve the accuracy of forming the preset angle between the center line of the rolling piece 10 and the rolling center line.

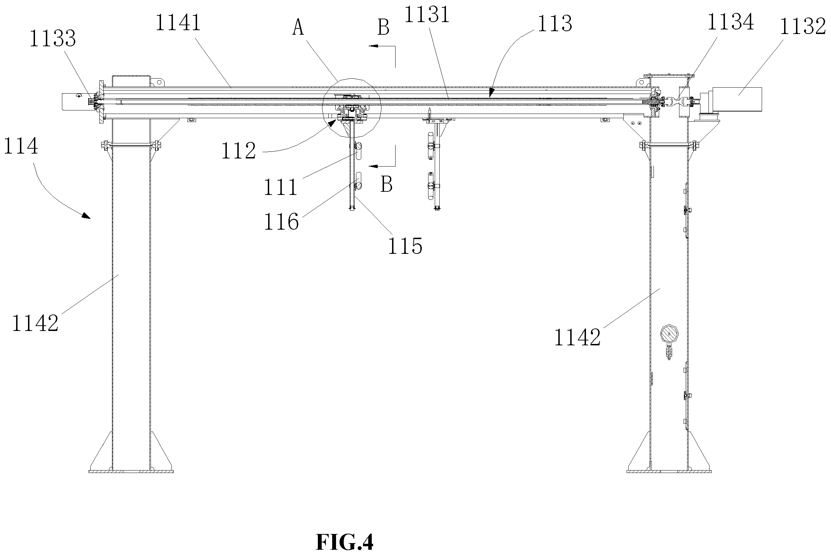

In one optional embodiment of the present disclosure, as illustrated in FIG. 4, the laser lineation positioning device 11 comprises a laser emitter 111, a rotation assembly 112, a traverse assembly 113 and a mounting frame 114. The mounting frame 114 is fixedly disposed above the rotary roller table 12. The traverse assembly 113 is fixedly disposed at a top portion of the mounting frame 114. The rotation assembly 112 is movably disposed at a bottom portion of the traverse assembly 113 along the traverse assembly 113. A mounting rod 115 is disposed below the rotation assembly 112 in a vertical direction. A top end of the mounting rod 115 is connected to a bottom portion of the rotation assembly 112, and a bottom end of the mounting rod 115 extends towards the rotary roller table 12. The laser emitter 111 is rotatably disposed on the mounting rod 115. The traverse assembly 113 can drive the rotation assembly 112 to move on the traverse assembly 113, so that the laser emitter 111 is movable in a horizontal direction to adjust a position of the laser emitter 111 in the horizontal direction. The rotation assembly 112 can drive the laser emitter 111 to rotate to adjust an emitting direction of the laser light rays so as to accurately position the rolling piece 10.

In this embodiment, the laser emitter 111 is pivoted with the mounting rod 115 through a rotating shaft, and a setting direction of the rotating shaft is perpendicular to a setting direction of the mounting rod 115. The laser emitter 111 is rotatable on the rotating shaft and cooperate with the rotation assembly 112 to adjust the emitting direction of the laser light rays.

Further, as illustrated in FIGs. 3 and 4, two rotation assemblies 112 may be disposed at the bottom portion of each of the traverse assemblies 113, and the mounting rod 115 and the laser emitter 111 are disposed below each of the rotation assemblies 112. Two parallel laser light rays can be emitted by the two laser emitters 111 to position both sides of the rolling piece 10, thereby improving the accuracy of the adjustment of the preset angle of the rolling piece 10.

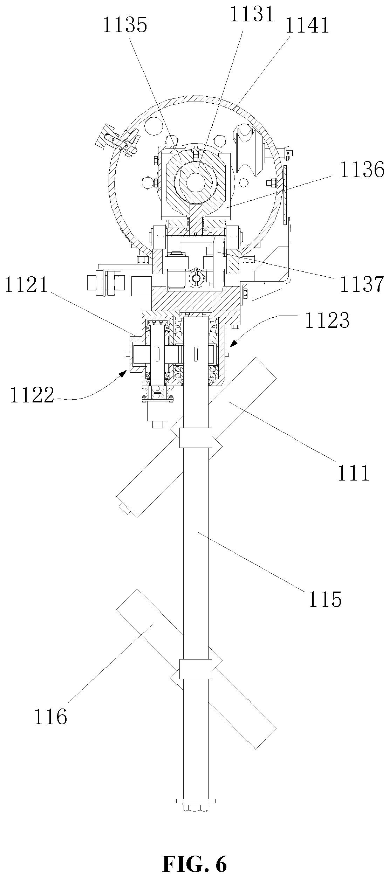

In one optional embodiment of the present disclosure, as illustrated in FIGs. 4 and 6, the laser lineation positioning device 11 further comprises a grating emitter 116, which is rotatably disposed on the mounting rod 115 and is located below the laser emitter 111. The rolling piece 10 not only can be positioned directly through the laser light rays, and but also can be positioned in an extending direction of a stripe light spot by the grating emitter 116 cooperating with the laser emitter 111 to form the stripe light spot on the rotary roller table 12.

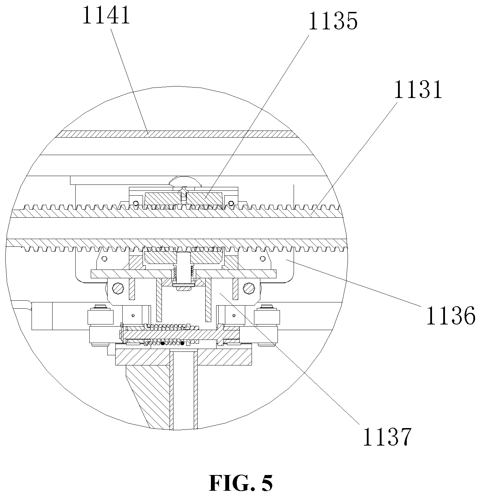

In one optional embodiment of the present disclosure, as illustrated in FIGs. 4 and 5, the mounting frame 114 comprises a connection bracket 1141 disposed in a horizontal direction, and two stand columns 1142 disposed in a vertical direction and respectively on two sides of the rotary roller table 12. Bottom ends of the stand columns 1142 are fixed on a mounting plane, a top end of one stand column 1142 is connected to one end of the connection bracket 1141, a top end of the other stand column 1142 is connected to the other end of the connection bracket 1141. The traverse assembly 113 is disposed on the connection bracket 1141. By setting the mounting frame 114, it is ensured that the laser emitter 111 is disposed above the rotary roller table 12, so as to meet the requirement of positioning the rolling piece 10.

Further, as illustrated in FIG. 6, the connection bracket 1141 is a cylindrical structure disposed in a horizontal direction, and a guidance moving component 1131 is disposed inside the connection bracket 1141. A bottom portion of the connection bracket 1141 is provided with an opening in a length direction of the connection bracket 1141, so that the guidance moving component 1131 can be connected to the laser emitter 111 below the connection bracket 1141.

In one optional embodiment of the present disclosure, as illustrated in FIGs. 4 to 6, the traverse assembly 113 comprises a guidance moving component 1131 and a first drive motor 1132. The guidance moving component 1131 is disposed on the connection bracket 1141 in a horizontal direction. A bearing is disposed between each of two sides of the guidance moving component 1131 close to an end portion thereof and the connection bracket 1141. One end of the guidance moving component 1131 is connected to an output shaft of the first drive motor 1132 through a coupling 1134, and the other end of the guidance moving component 1131 is connected to a first encoder 1133. The first drive motor 1132 drives the guidance moving component 1131 to rotate to adjust the position of the laser emitter 111 on the guidance moving component 1131, thereby changing the position of the laser emitter 111 in the horizontal direction. The first encoder 1133 can record the rotation speed and the rotation direction of the guidance moving component 1131 in real time, so as to acquire the position information of the laser emitter 111 in the horizontal direction.

Further, the guidance moving component 1131 can adopt, but is not limited to, a lead screw structure sleeved with a nut 1135, or a ball lead screw pair.

In one optional embodiment of the present disclosure, as illustrated in FIGs. 4 to 6, the traverse assembly 113 further comprises a first housing 1136 and a connection frame 1137, wherein the first housing 1136 movably sleeves the guidance moving component 1131, a top portion of the connection frame 1137 is connected to a bottom portion of the first housing 1136, and the rotation assembly 112 is disposed at a bottom portion of the connection frame 1137.

Specifically, as illustrated in FIGs. 5 and 6, the first housing 1136 is provided therein with an accommodation cavity, in which the nut 1135 on the lead screw structure is fixedly disposed. During the rotation of the lead screw, the first housing 1136 moves synchronously with the nut 1135 on the lead screw.

In one optional embodiment of the present disclosure, as illustrated in FIGs. 4, 6 and 7, the rotation assembly 112 comprises a second housing 1121, a driving component 1122 and a driven component 1123. Both of the driving component 1122 and the driven component 1123 are disposed in the second housing 1121, wherein the driving component 1122 comprises a driving shaft 11221, a driving gear 11224 and a second drive motor 11224, the driving shaft 11221 is fixedly disposed in the second housing 1121 in a vertical direction, the second drive motor 11222 is located below the driving shaft 11221, a bottom end of the driving shaft 11221 is connected to an output shaft of the second drive motor 11222, and the driving gear 11224 fixedly sleeves a middle portion of the driving shaft 11221. The driven component 1123 comprises a driven shaft 11231 and a driven gear 11232, wherein the driven shaft 11231 is fixedly disposed in the second housing 1121 and is parallel to the driving shaft 11221. The driven gear 11232 fixedly sleeves a middle portion of the driven shaft 11231, the driven gear 11232 meshes with the driving gear 11224, and a bottom end of the driven shaft 11231 is connected to a top end of the mounting rod 115. The second drive motor 11222 drives the driving shaft 11221 to rotate, so as to drive the driven shaft 11231 to rotate by the meshed driving gear 11224 and driven gear 11232, and then drive the laser emitter 111 to rotate by the driven shaft 11231, thereby adjusting the emitting direction of the laser light rays.

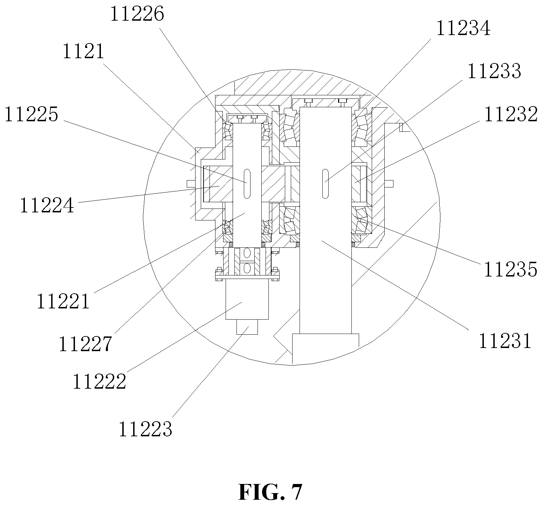

In this embodiment, as illustrated in FIG. 7, the second drive motor 11222 is connected to a second encoder 11223. With the second encoder 11223, the rotation speed and the rotation direction of the driving shaft 11221 can be recorded in real time, so as to acquire the emission angle information of the laser emitter 111.

Further, a first positioning flat key 11225 is disposed between the driving shaft 11221 and the driving gear 11224, and a second positioning flat key 11233 is disposed between the driven shaft 11231 and the driven gear 11232. A stable connection between the driving gear 11224 and the driving shaft 11221 and a stable connection between the driven gear 11232 and the driven shaft 11231 are ensured.

Further, a first upper bearing 11226 is disposed between a top end of the driving shaft 11221 and the second housing 1121, and a first lower bearing 11227 is disposed between a bottom end of the driving shaft 11221 and the second housing 1121. A second upper bearing 11234 is disposed between a top end of the driven shaft 11231 and the second housing 1121, and a second lower bearing 11235 is disposed between a bottom end of the driven shaft 11231 and the second housing 1121.

In one optional embodiment of the present disclosure, as illustrated in FIG. 3, the entry side rotary roller table 1 and the exit side rotary roller table 3 are both composed of a plurality of first roller tables disposed side by side in a horizontal direction, each of the first roller tables is connected to a first roller table motor, and adjacent first roller table motors can drive the corresponding first roller tables to rotate in a same direction or in opposite directions. By controlling the rotation direction and the rotation speed of each of the first roller tables, it can be ensured that the rolling piece 10 smoothly rotates to the preset angle.

Further, when the rotation directions of the adjacent first roller tables on the entry side rotary roller table 1 and the exit side rotary roller table 3 are opposite to each other, the first roller tables can be grouped in odd and even numbers, wherein the first roller tables in a same odd or even group rotate in a same direction, while the first roller tables in an odd group and the first roller tables in an even group rotate in opposite directions (i.e., two adjacent first roller tables rotate in opposite directions, and two first roller tables with one first roller table therebetween rotate in a same direction).

Specifically, the first roller table motors may be disposed on the same side or on both sides of the entry side rotary roller table 1 and the exit side rotary roller table 3, as long as it is convenient to control the entry side rotary roller table 1 and the exit side rotary roller table 3. When it needs to control the first roller tables rotating in a same direction in the entry side rotary roller table 1 and the exit side rotary roller table 3, a gear distribution box may be connected to each of the first roller table motors, so as to centrally control the first roller tables rotating in the same direction, or each of the first roller tables is separately connected to one of the first roller table motors, so as to control each of the first roller tables independently.

Further, the entry side rotary roller table 1 and the exit side rotary roller table 3 may be connected to the first roller table motor in various transmission connection modes:
connection mode 1: the output shaft of the first roller table motor is connected to the first roller table through a coupling;
connection mode 2: the output shaft of the first roller table motor is connected to the first roller table through an extension shaft;
connection mode 3: the output shaft of the first roller table motor is connected to the first roller table through a speed reducer and a coupling in turn;
connection mode 4: the output shaft of the first roller table motor is connected to the first roller table through a speed reducer and an extension shaft in turn;
connection mode 5: the output shaft of the first roller table motor is connected to the first roller table through a speed reducer, a gear distribution box and a coupling in turn;
connection mode 6: the output shaft of the first roller table motor is connected to the first roller table through a speed reducer, a gear distribution box and an extension shaft in turn.

Specifically, the extension shaft may be, but is not limited to, a crosshead universal joint shaft, a drum gear j oint shaft or a combined j oint shaft.

Specifically, as illustrated in FIG. 3, each of two sides of the entry side rotary roller table 1 is provided with an entry side guide 8 which is provided with an entry side pushing plate 811, and the entry side guide 8 can control the entry side pushing plate 811 to move towards a middle portion of the entry side rotary roller table 1. Each of two sides of the exit side rotary roller table 3 is provided with an exit side guide 9 which is provided with an exit side pushing plate 911, and the exit side guide 9 can control the exit side pushing plate 911 to move towards a middle portion of the exit side rotary roller table 3. After the rolling piece 10 rotates to a preset angle, the rolling piece 10 is pushed to a position of laser light rays through the entry side guide 8 and the exit side guide 9, so as to detect a rotation angle of the rolling piece 10.

Further, as illustrated in FIG. 3, an entry side feed roller 5 is disposed between an output end of the entry side rotary roller table 1 and the mill roll 2, and an exit side feed roller 6 is disposed between the mill roll 2 and an input end of the exit side rotary roller table 3. The entry side feed roller 5 and the exit side feed roller 6 are both composed of a plurality of second roller tables disposed side by side in a horizontal direction, one side of each of the second roller tables is provided with a second roller table motor which drives the second roller table to rotate, and an end portion of the second roller table is connected to the output shaft of the second roller table motor. The entry side feed roller 5 and the exit side feed roller 6 ensure the smooth input and output of the rolling piece 10 to the mill roll 2, thereby ensuring the smooth rolling of the rolling piece 10.

In one optional embodiment of the present disclosure, as illustrated in FIG. 3, the rolling mill area production equipment with the laser lineation positioning device further comprises an entry side conveying roller table 4 and an exit side conveying roller table 7, wherein an output end of the entry side conveying roller table 4 is connected to an input end of the entry side rotary roller table 1, and an input end of the exit side conveying roller table 7 is connected to an output end of the exit side rotary roller table 3. The entry side conveying roller table 4 and the exit side conveying roller table 7 are both composed of a plurality of third roller tables disposed side by side in a horizontal direction, one side of each of the third roller tables is provided with a third roller table motor which drives the third roller table to rotate, and an end portion of the third roller table is connected to an output shaft of the third roller table motor. The smooth input and output of the rolling piece 10 is ensured by the entry side conveying roller table 4 and the exit side conveying roller table 7.

During the working of the rolling mill area production equipment with the laser lineation positioning device according to the present disclosure, when the rolling piece 10 enters the mill roll 2 through the entry side rotary roller table 1, according to the angle requirement of the angular rolling production process, the laser lineation positioning device 11 on the entry side rotary roller table 1 projects laser light rays in the area of the entry side rotary roller table 1 to set a preset angle of the rolling piece 10. When the rolling piece 10 is rotated through the entry side rotary roller table 1 to move to a set position of the laser light rays of the laser lineation positioning device 11, the preset angle is formed between the center line of the rolling piece 10 and the rolling center line, so that the forward rolling of the rolling piece can be completed. When the rolling piece 10 enters the mill roll 2 through the exit side rotary roller table 3 after the forward rolling, according to the angle requirements of the angular rolling production process, the laser lineation positioning device 11 on the exit side rotary roller table 3 projects laser light rays in the area of the exit side rotary roller table 3 to set a preset angle of the rolling piece 10. When the rolling piece 10 is rotated through the exit side rotary roller table 3 to move to a set position of the laser lineation positioning device 11, the preset angle is again formed between the center line of the rolling piece 10 and the rolling center line, so that the reverse rolling of the rolling piece 10 can be completed. The rolling piece 10 can be directly output or subjected to the subsequent conventional longitudinal rolling after multiple times of forward and reverse angular rolling productions according to the requirements of the production process.

The characteristics and advantages of the rolling mill area production equipment with the laser lineation positioning device according to the present disclosure are as follows.

In the rolling mill area production equipment with the laser lineation positioning device, the laser lineation positioning devices 11 capable of emitting laser light rays to position the preset angle of the rolling piece 10 are disposed on the entry side rotary roller table 1 and the exit side rotary roller table 3, respectively. The preset angle of the rolling piece 10 is pre-calibrated through the laser light rays emitted by the laser lineation positioning devices 11 when the rolling piece 10 passes through the entry side rotary roller table 1 and the exit side rotary roller table 3. When the rolling piece 10 passes through such position, an operator can visually observe whether the preset angle of the rolling piece reaches a preset standard, which facilitates a timely and accurate adjustment of the preset angle of the rolling piece 10, meets the requirement of the setting direction of the rolling piece 10, shortens the adjustment time of the angle of the rolling piece 10, avoids any collision and impact between the rolling piece 10 and other components during the setting of the inclination angle, and greatly improves the production rhythm and the production efficiency.

### Embodiment 2

The present disclosure provides a hot rolling production line, comprising a rolling mill mounting area, in which the aforementioned rolling mill area production equipment with the laser lineation positioning device is disposed.

In one optional embodiment of the present disclosure, the rolling mill mounting area is a single-feed rolling mill area, in which the rolling mill area production equipment with the laser lineation positioning device is disposed, wherein a rolling mill is disposed in the single-feed rolling mill area, so as to output the rolling piece 10 after rough rolling and finish rolling thereof are completed.

In another optional embodiment of the present disclosure, the rolling mill mounting area is a double-stand rolling mill area, that is, the rolling mill mounting area comprises a rough rolling mill area and a finishing rolling mill area, an output end of the rough rolling mill area being connected to an input end of the finishing rolling mill area, and the rough rolling mill area and/or the finishing rolling mill area being provided therein with the rolling mill area production equipment with the laser lineation positioning device. In which, the rough rolling mill area and the finishing rolling mill area are provided therein with one rolling mill, respectively, and the rolling piece 10 passes through the rough rolling mill area for a rough rolling treatment, then passes through the finishing rolling mill area for a finish rolling treatment, and finally is output.

The characteristics and advantages of the hot rolling production line according to the present disclosure are as follows.

In the hot rolling production line, the rolling mill mounting area is provided therein with the rolling mill area production equipment with the laser lineation positioning device, through which the preset angle of the rolling piece 10 during rolling thereof can be calibrated, thereby facilitating an operator to adjust the preset angle of the rolling piece 10 during the rolling thereof, effectively meeting the rolling process requirements and contributing to improving the production efficiency of the hot rolling production line.

Those described above are just specific embodiments of the present disclosure, and are not intended to limit the scope of the present invention. Any equivalent change and modification made by those skilled in the art without departing from the concept and principle of the present invention should fall within the protection scope of the present invention as defined by the appended claims.

## Claims

1. A rolling mill area production equipment with a laser lineation positioning device, comprising: a laser lineation positioning device (11) and a rotary roller table (12), wherein the laser lineation positioning device (11) is able to calibrate a preset angle of a rolling piece (10) through laser light rays emitted outwards, so that the preset angle is formed between a center line of the rolling piece (10) and a rolling center line, wherein the laser lineation positioning device (11) is disposed above the rotary roller table (12) and is able to transversely move on a corresponding rotary roller table (12), and the rotary roller table (12) is configured to drive the rolling piece (10) to rotate to the preset angle, wherein the rotary roller table (12) comprises an entry side rotary roller table (1) and an exit side rotary roller table (3), there are at least two sets of the laser lineation positioning devices (11), two sets of the laser lineation positioning devices (11) are correspondingly disposed on the entry side rotary roller table (1) and the exit side rotary roller table (3), and a mill roll (2) is disposed between the entry side rotary roller table (1) and the exit side rotary roller table (3),
wherein the entry side rotary roller table (1) and the exit side rotary roller table (3) are both composed of a plurality of first roller tables disposed side by side in a horizontal direction, each of the first roller tables is connected to a first roller table motor, and adjacent first roller table motors can drive corresponding first roller tables to rotate in a same direction or in opposite directions.

2. The rolling mill area production equipment with a laser lineation positioning device according to claim 1, wherein the laser lineation positioning device (11) comprises a laser emitter (111), a rotation assembly (112), a traverse assembly (113) and a mounting frame (114), wherein the mounting frame (114) is fixedly disposed above the rotary roller table (12), the traverse assembly (113) is disposed at a top portion of the mounting frame (114), the rotation assembly (112) is movably disposed at a bottom portion of the traverse assembly (113) along the traverse assembly (113), a mounting rod (115) is disposed below the rotation assembly (112), a top end of the mounting rod (115) is connected to a bottom portion of the rotation assembly (112), a bottom end of the mounting rod (115) extends towards the rotary roller table (12), and the laser emitter (111) is rotatably disposed on the mounting rod (115).

3. The rolling mill area production equipment with a laser lineation positioning device according to claim 2, wherein the laser lineation positioning device (11) further comprises a grating emitter (116) which is rotatably disposed on the mounting rod (115) and located below the laser emitter (111).

4. The rolling mill area production equipment with a laser lineation positioning device according to claim 2 or 3, wherein the mounting frame (114) comprises a connection bracket (1141), and two stand columns (1142) respectively disposed on two sides of the rotary roller table (12), wherein bottom ends of the stand columns (1142) are fixed on a mounting plane, top ends of the stand columns (1142) are connected to two ends of the connection bracket (1141), respectively, and the traverse assembly (113) is disposed on the connection bracket (1141).

5. The rolling mill area production equipment with a laser lineation positioning device according to claim 4, wherein the traverse assembly (113) comprises a guidance moving component (1131) and a first drive motor (1132), wherein the guidance moving component (1131) is disposed on the connection bracket (1141) in a horizontal direction, a bearing is disposed between each of two sides of the guidance moving component (1131) close to an end portion thereof and the connection bracket (1141), one end of the guidance moving component (1131) is connected to an output shaft of the first drive motor (1132) through a coupling (1134), and the other end of the guidance moving component (1131) is connected to a first encoder (1133).

6. The rolling mill area production equipment with a laser lineation positioning device according to claim 5, wherein the connection bracket (1141) is a cylindrical structure disposed in a horizontal direction, and the guidance moving component (1131) is disposed inside the connection bracket (1141); and/or
wherein the guidance moving component (1131) is a lead screw structure sleeved with a nut (1135), or a ball lead screw pair, wherein the traverse assembly (113) further comprises a first housing (1136) and a connection frame (1137), wherein the first housing (1136) movably sleeves the guidance moving component (1131), a top portion of the connection frame (1137) is connected to a bottom portion of the first housing (1136), and the rotation assembly (112) is disposed at a bottom portion of the connection frame (1137).

7. The rolling mill area production equipment with a laser lineation positioning device according to any one of claims 2 to 6, wherein the rotation assembly (112) comprises a second housing (1121), a driving component (1122) and a driven component (1123), both of the driving component (1122) and the driven component (1123) are disposed in the second housing (1121), wherein
the driving component (1122) comprises a driving shaft (11221), a driving gear (11224) and a second drive motor (11222), wherein the driving shaft (11221) is disposed in a vertical direction, a bottom end of the driving shaft (11221) is connected to an output shaft of the second drive motor (11222), and the driving gear (11224) fixedly sleeves the driving shaft (11221);
the driven component (1123) comprises a driven shaft (11231) and a driven gear (11232), wherein the driven shaft (11231) is disposed in parallel with the driving shaft (11221), the driven gear (11232) fixedly sleeves the driven shaft (11231), the driven gear (11232) meshes with the driving gear (11224), and a bottom end of the driven shaft (11231) is connected to a top end of the mounting rod (115).

8. The rolling mill area production equipment with a laser lineation positioning device according to claim 7, wherein the second drive motor (11222) is connected to a second encoder (11223); and/or
wherein a first positioning flat key (11225) is disposed between the driving shaft (11221) and the driving gear (11224), and a second positioning flat key (11233) is disposed between the driven shaft (11231) and the driven gear (11232); and/or
wherein a first upper bearing (11226) and a first lower bearing (11227) are respectively disposed between top and bottom ends of the driving shaft (11221) and the second housing (1121); and a second upper bearing (11234) and a second lower bearing (11235) are respectively disposed between top and bottom ends of the driven shaft (11231) and the second housing (1121).

9. The rolling mill area production equipment with a laser lineation positioning device according to claim 1, wherein an entry side feed roller (5) is disposed between an output end of the entry side rotary roller table (1) and the mill roll (2), and an exit side feed roller (6) is disposed between the mill roll (2) and an input end of the exit side rotary roller table (3), wherein the entry side feed roller (5) and the exit side feed roller (6) are both composed of a plurality of second roller tables disposed side by side in a horizontal direction, one side of each of the second roller tables is provided with a second roller table motor by which the second roller table is driven to rotate.

10. The rolling mill area production equipment with a laser lineation positioning device according to claim 1 or 9 , further comprising an entry side conveying roller table (4) and an exit side conveying roller table (7), wherein an output end of the entry side conveying roller table (4) is connected to an input end of the entry side rotary roller table (1), and an input end of the exit side conveying roller table (7) is connected to an output end of the exit side rotary roller table (3), wherein the entry side conveying roller table (4) and the exit side conveying roller table (7) are both composed of a plurality of third roller tables disposed side by side in a horizontal direction, one side of each of the third roller tables is provided with a third roller table motor by which the third roller table is driven to rotate.

11. A hot rolling production line, comprising a rolling mill mounting area, **characterized in that** the rolling mill mounting area is provided therein with the rolling mill area production equipment with the laser lineation positioning device according to any one of claims 1 to 10.

12. The hot rolling production line according to claim 11, wherein the rolling mill mounting area is a single-feed rolling mill area provided therein with the rolling mill area production equipment with the laser lineation positioning device.

13. The hot rolling production line according to claim 11 or 12, wherein the rolling mill mounting area comprises a rough rolling mill area and a finishing rolling mill area, an output end of the rough rolling mill area is connected to an input end of the finishing rolling mill area, and the rough rolling mill area and/or the finishing rolling mill area is provided therein with the rolling mill area production equipment with the laser lineation positioning device.

## Patentansprüche

1. Eine Walzwerkbereich-Produktionsausrüstung mit einer Laserlinienpositionierungsvorrichtung, umfassend: eine Laserlinienpositionierungsvorrichtung (11) und einen Drehrollentisch (12), wobei die Laserlinienpositionierungsvorrichtung (11) in der Lage ist, einen voreingestellten Winkel eines Walzwerkstücks (10) durch nach außen emittierte Laserlichtstrahlen zu kalibrieren, sodass der voreingestellte Winkel zwischen einer Mittellinie des Walzwerkstücks (10) und einer Walzmittellinie gebildet wird, wobei die Laserlinienpositionierungsvorrichtung (11) oberhalb des Drehrollentisches (12) angeordnet und in der Lage ist, sich auf einem entsprechenden Drehrollentisch (12) quer zu bewegen, und der Drehrollentisch (12) ausgebildet ist, das Walzwerkstück (10) so anzutreiben, dass es sich in den voreingestellten Winkel dreht, wobei der Drehrollentisch (12) einen eintrittsseitigen Drehrollentisch (1) und einen austrittsseitigen Drehrollentisch (3) umfasst, es zumindest zwei Sätze der Laserlinienpositionierungsvorrichtungen (11) gibt, wobei die zwei Sätze der Laserlinienpositionierungsvorrichtungen (11) entsprechend auf dem eintrittsseitigen Drehrollentisch (1) und dem austrittsseitigen Drehrollentisch (3) angeordnet sind und eine Walzwerkwalze (2) zwischen dem eintrittsseitigen Drehrollentisch (1) und dem austrittsseitigen Drehrollentisch (3) angeordnet ist,
wobei der eintrittsseitige Drehrollentisch (1) und der austrittsseitige Drehrollentisch (3) beide aus einer Vielzahl von ersten Rollentischen bestehen, die in horizontaler Richtung nebeneinander angeordnet sind, jeder der ersten Rollentische mit einem ersten Rollentischmotor verbunden ist und benachbarte erste Rollentischmotoren entsprechende erste Rollentische antreiben können, um sich in dieselbe Richtung oder in entgegengesetzte Richtungen zu drehen.

2. Walzwerkbereich-Produktionsausrüstung mit einer Laserlinienpositionierungsvorrichtung nach Anspruch 1, wobei die Laserlinienpositionierungsvorrichtung (11) einen Laserstrahler (111), eine Drehbaugruppe (112), eine Traversenbaugruppe (113) und einen Montagerahmen (114) umfasst, wobei der Montagerahmen (114) fest über dem Drehrollentisch (12) angeordnet ist, die Traversenbaugruppe (113) an einem oberen Abschnitt des Montagerahmens (114) angeordnet ist, die Drehbaugruppe (112) an einem unteren Abschnitt der Traversenbaugruppe (113) entlang der Traversenbaugruppe (113) beweglich angeordnet ist, eine Montagestange (115) unterhalb der Drehbaugruppe (112) angeordnet ist, ein oberes Ende der Montagestange (115) mit einem unteren Abschnitt der Drehbaugruppe (112) verbunden ist, ein unteres Ende der Montagestange (115) sich in Richtung des Drehrollentisches (12) erstreckt, und der Laserstrahler (111) drehbar an der Montagestange (115) angeordnet ist.

3. Walzwerkbereich-Produktionsausrüstung mit einer Laserlinienpositionierungsvorrichtung nach Anspruch 2, wobei die Laserlinienpositionierungsvorrichtung (11) ferner einen Gitterstrahler (116) umfasst, der drehbar an der Montagestange (115) angeordnet ist und sich unterhalb des Laserstrahlers (111) befindet.

4. Walzwerkbereich-Produktionsausrüstung mit einer Laserlinienpositionierungsvorrichtung nach Anspruch 2 oder 3, wobei der Montagerahmen (114) einen Verbindungsbügel (1141) und zwei Standsäulen (1142) umfasst, die jeweils auf zwei Seiten des Drehrollentisches (12) angeordnet sind, wobei die unteren Enden der Standsäulen (1142) auf einer Montageebene befestigt sind, die oberen Enden der Standsäulen (1142) jeweils mit zwei Enden des Verbindungsbügels (1141) verbunden sind und die Traversenbaugruppe (113) an dem Verbindungsbügel (1141) angeordnet ist.

5. Walzwerkbereich-Produktionsausrüstung mit einer Laserlinienpositionierungsvorrichtung nach Anspruch 4, wobei die Traversenbaugruppe (113) eine Führungsbewegungskomponente (1131) und einen ersten Antriebsmotor (1132) umfasst, wobei die Führungsbewegungskomponente (1131) an dem Verbindungsbügel (1141) in einer horizontalen Richtung angeordnet ist, wobei ein Lager zwischen jeder von zwei Seiten der Führungsbewegungskomponente (1131) nahe einem Endabschnitt davon und dem Verbindungsbügel (1141) angeordnet ist, ein Ende der Führungsbewegungskomponente (1131) über eine Kupplung (1134) mit einer Ausgangswelle des ersten Antriebsmotors (1132) verbunden ist, und das andere Ende der Führungsbewegungskomponente (1131) mit einem ersten Codierer (1133) verbunden ist.

6. Walzwerkbereich-Produktionsausrüstung mit einer Laserlinienpositionierungsvorrichtung nach Anspruch 5, wobei der Verbindungsbügel (1141) eine zylindrische Struktur ist, die in einer horizontalen Richtung angeordnet ist, und die Führungsbewegungskomponente (1131) innerhalb des Verbindungsbügels (1141) angeordnet ist; und/oder
wobei die Führungsbewegungskomponente (1131) eine mit einer Mutter (1135) ummantelte Spindelstruktur oder ein Kugelumlaufspindelpaar ist, wobei die Traversenbaugruppe (113) ferner ein erstes Gehäuse (1136) und einen Verbindungsrahmen (1137) umfasst, wobei das erste Gehäuse (1136) die Führungsbewegungskomponente (1131) beweglich ummantelt, ein oberer Abschnitt des Verbindungsrahmens (1137) mit einem unteren Abschnitt des ersten Gehäuses (1136) verbunden ist und die Drehbaugruppe (112) an einem unteren Abschnitt des Verbindungsrahmens (1137) angeordnet ist.

7. Walzwerkbereich-Produktionsausrüstung mit einer Laserlinienpositionierungsvorrichtung nach einem der Ansprüche 2 bis 6, wobei die Drehbaugruppe (112) ein zweites Gehäuse (1121), eine Antriebskomponente (1122) und eine angetriebene Komponente (1123) umfasst, wobei sowohl die Antriebskomponente (1122) als auch die angetriebene Komponente (1123) in dem zweiten Gehäuse (1121) angeordnet sind, wobei
die Antriebskomponente (1122) eine Antriebswelle (11221), ein Antriebszahnrad (11224) und einen zweiten Antriebsmotor (11222) umfasst, wobei die Antriebswelle (11221) in einer vertikalen Richtung angeordnet ist, ein unteres Ende der Antriebswelle (11221) mit einer Ausgangswelle des zweiten Antriebsmotors (11222) verbunden ist und das Antriebszahnrad (11224) die Antriebswelle (11221) fest ummantelt;
die angetriebene Komponente (1123) eine angetriebene Welle (11231) und ein angetriebenes Zahnrad (11232) umfasst, wobei die angetriebene Welle (11231) parallel zu der Antriebswelle (11221) angeordnet ist, das angetriebene Zahnrad (11232) die angetriebene Welle (11231) fest ummantelt, das angetriebene Zahnrad (11232) mit dem Antriebszahnrad (11224) ineinandergreift, und ein unteres Ende der angetriebenen Welle (11231) mit einem oberen Ende der Montagestange (115) verbunden ist.

8. Walzwerkbereich-Produktionsausrüstung mit einer Laserlinienpositionierungsvorrichtung nach Anspruch 7, wobei der zweite Antriebsmotor (11222) mit einem zweiten Codierer (11223) verbunden ist; und/oder
wobei ein erster Positionierungsflachkeil (11225) zwischen der Antriebswelle (11221) und dem Antriebszahnrad (11224) angeordnet ist und ein zweiter Positionierungsflachkeil (11233) zwischen der angetriebenen Welle (11231) und dem angetriebenen Zahnrad (11232) angeordnet ist; und/oder
wobei ein erstes oberes Lager (11226) und ein erstes unteres Lager (11227) jeweils zwischen den oberen und unteren Enden der Antriebswelle (11221) und dem zweiten Gehäuse (1121) angeordnet sind; und ein zweites oberes Lager (11234) und ein zweites unteres Lager (11235) jeweils zwischen den oberen und unteren Enden der angetriebenen Welle (11231) und dem zweiten Gehäuse (1121) angeordnet sind.

9. Walzwerkbereich-Produktionsausrüstung mit einer Laserlinienpositionierungsvorrichtung nach Anspruch 1, wobei eine eintrittsseitige Einzugswalze (5) zwischen einem Ausgangsende des eintrittsseitigen Drehrollentisches (1) und der Walzwerkwalze (2) angeordnet ist, und eine austrittsseitige Einzugswalze (6) zwischen der Walzwerkwalze (2) und einem Eingangsende des austrittsseitigen Drehrollentisches (3) angeordnet ist, wobei die eintrittsseitige Einzugswalze (5) und die austrittsseitige Einzugswalze (6) beide aus einer Vielzahl von zweiten Rollentischen bestehen, die nebeneinander in horizontaler Richtung angeordnet sind, wobei eine Seite jedes der zweiten Rollentische mit einem zweiten Rollentischmotor vorgesehen ist, durch den der zweite Rollentisch zur Drehung angetrieben wird.

10. Walzwerkbereich-Produktionsausrüstung mit einer Laserlinienpositionierungsvorrichtung nach Anspruch 1 oder 9, ferner umfassend einen eintrittsseitigen Förderrollentisch (4) und einen austrittsseitigen Förderrollentisch (7), wobei ein Ausgangsende des eintrittsseitigen Förderrollentisches (4) mit einem Eingangsende des eintrittsseitigen Drehrollentisches (1) verbunden ist, und ein Eingangsende des austrittsseitigen Förderrollentisches (7) mit einem Ausgangsende des austrittsseitigen Drehrollentisches (3) verbunden ist, wobei der eintrittsseitige Förderrollentisch (4) und der austrittsseitige Förderrollentisch (7) beide aus einer Vielzahl von dritten Rollentischen bestehen, die nebeneinander in horizontaler Richtung angeordnet sind, wobei eine Seite jedes der dritten Rollentische mit einem dritten Rollentischmotor vorgesehen ist, durch den der dritte Rollentisch zur Drehung angetrieben wird.

11. Warmwalzproduktionslinie, umfassend einen Walzwerkmontagebereich, **dadurch gekennzeichnet, dass** der Walzwerkmontagebereich darin mit der Walzwerkbereich-Produktionsausrüstung mit der Laserlinienpositionierungsvorrichtung nach einem der Ansprüche 1 bis 10 vorgesehen ist.

12. Warmwalzproduktionslinie nach Anspruch 11, wobei der Walzwerkmontagebereich ein Walzwerkbereich mit Einzelzuführung ist, in dem die Walzwerkbereich-Produktionsausrüstung mit der Laserlinienpositionierungsvorrichtung vorgesehen ist.

13. Warmwalzproduktionslinie nach Anspruch 11 oder 12, wobei der Walzwerkmontagebereich einen Vorwalzwerkbereich und einen Fertigwalzwerkbereich umfasst, ein Ausgangsende des Vorwalzwerkbereichs mit einem Eingangsende des Fertigwalzwerkbereichs verbunden ist und der Vorwalzwerkbereich und/oder der Fertigwalzwerkbereich darin mit der Walzwerkbereich-Produktionsausrüstung mit der Laserlinienpositionierungsvorrichtung vorgesehen ist.

## Revendications

1. Équipement de production de zone de laminoir avec dispositif de positionnement d'alignement laser, comprenant : un dispositif de positionnement d'alignement laser (11) et une table à rouleaux rotatifs (12), dans lequel le dispositif de positionnement d'alignement laser (11) est capable d'étalonner un angle prédéfini d'une pièce de laminage (10) par l'intermédiaire de rayons de lumière laser émis vers l'extérieur, de sorte que l'angle prédéfini est formé entre une ligne centrale de la pièce de laminage (10) et une ligne centrale de laminage, dans lequel le dispositif de positionnement d'alignement laser (11) est disposé au-dessus de la table à rouleaux rotatifs (12) et est capable de se déplacer transversalement sur une table à rouleaux rotatifs (12) correspondante, et la table à rouleaux rotatifs (12) est configurée pour entraîner la pièce de laminage (10) en rotation selon l'angle prédéfini, dans lequel la table à rouleaux rotatifs (12) comprend une table à rouleaux rotatifs côté entrée (1) et une table à rouleaux rotatifs côté sortie (3), il existe au moins deux ensembles des dispositifs de positionnement d'alignement laser (11), deux ensembles des dispositifs de positionnement d'alignement laser (11) sont disposés en correspondance sur la table à rouleaux rotatifs côté entrée (1) et la table à rouleaux rotatifs côté sortie (3), et un rouleau de laminoir (2) est disposé entre la table à rouleaux rotatifs côté entrée (1) et la table à rouleaux rotatifs côté sortie (3),
dans lequel la table à rouleaux rotatifs côté entrée (1) et la table à rouleaux rotatifs côté sortie (3) sont toutes les deux composées d'une pluralité de premières tables à rouleaux disposées côte à côte dans une direction horizontale, chacune des premières tables à rouleaux est raccordée à un premier moteur de table à rouleaux, et des premiers moteurs de table à rouleaux adjacents peuvent entraîner des premières tables à rouleaux correspondantes en rotation dans un même sens ou dans des sens opposés.

2. Équipement de production de zone de laminoir avec dispositif de positionnement d'alignement laser selon la revendication 1, dans lequel le dispositif de positionnement d'alignement laser (11) comprend un émetteur laser (111), un ensemble de rotation (112), un ensemble transversal (113) et un cadre de montage (114), dans lequel le cadre de montage (114) est disposé fixe au-dessus de la table à rouleaux rotatifs (12), l'ensemble transversal (113) est disposé au niveau d'une partie haute du cadre de montage (114), l'ensemble de rotation (112) est disposé mobile au niveau d'une partie basse de l'ensemble transversal (113) le long de l'ensemble transversal (113), une tige de montage (115) est disposée sous l'ensemble de rotation (112), une extrémité haute de la tige de montage (115) est raccordée à une partie basse de l'ensemble de rotation (112), une extrémité basse de la tige de montage (115) s'étend vers la table à rouleaux rotatifs (12), et l'émetteur laser (111) est disposé rotatif sur la tige de montage (115).

3. Équipement de production de zone de laminoir avec dispositif de positionnement d'alignement laser selon la revendication 2, dans lequel le dispositif de positionnement d'alignement laser (11) comprend en outre un émetteur à réseau (116) qui est disposé rotatif sur la tige de montage (115) et situé sous l'émetteur laser (111).

4. Équipement de production de zone de laminoir avec dispositif de positionnement d'alignement laser selon la revendication 2 ou 3, dans lequel le cadre de montage (114) comprend une ferrure de raccordement (1141), et deux colonnes de soutien (1142) respectivement disposées sur deux côtés de la table à rouleaux rotatifs (12), dans lequel des extrémités basses des colonnes de soutien (1142) sont fixées sur un plan de montage, des extrémités hautes des colonnes de soutien (1142) sont raccordées aux deux extrémités de la ferrure de raccordement (1141), respectivement, et l'ensemble transversal (113) est disposé sur la ferrure de raccordement (1141).

5. Équipement de production de zone de laminoir avec dispositif de positionnement d'alignement laser selon la revendication 4, dans lequel l'ensemble transversal (113) comprend un composant mobile de guidage (1131) et un premier moteur d'entraînement (1132), dans lequel le composant mobile de guidage (1131) est disposé sur la ferrure de raccordement (1141) dans une direction horizontale, un palier est disposé entre chacun des deux côtés du composant mobile de guidage (1131) à proximité d'une partie d'extrémité de celui-ci et de la ferrure de raccordement (1141), une extrémité du composant mobile de guidage (1131) est raccordée à un arbre de sortie du premier moteur d'entraînement (1132) par l'intermédiaire d'un couplage (1134), et l'autre extrémité du composant mobile de guidage (1131) est raccordée à un premier codeur (1133).

6. Équipement de production de zone de laminoir avec dispositif de positionnement d'alignement laser selon la revendication 5, dans lequel la ferrure de raccordement (1141) est une structure cylindrique disposée dans une direction horizontale, et le composant mobile de guidage (1131) est disposé à l'intérieur de la ferrure de raccordement (1141) ; et/ou
dans lequel le composant mobile de guidage (1131) est une structure de vis-mère chemisée avec un écrou (1135), ou une paire de vis à billes, dans lequel l'ensemble transversal (113) comprend en outre un premier boîtier (1136) et un cadre de raccordement (1137), dans lequel le premier boîtier (1136) chemise de manière mobile le composant mobile de guidage (1131), une partie haute du cadre de raccordement (1137) est raccordée à une partie basse du premier boîtier (1136), et l'ensemble de rotation (112) est disposé au niveau d'une partie basse du cadre de raccordement (1137).

7. Équipement de production de zone de laminoir avec dispositif de positionnement d'alignement laser selon l'une quelconque des revendications 2 à 6, dans lequel l'ensemble de rotation (112) comprend un deuxième boîtier (1121), un composant d'entraînement (1122) et un composant entraîné (1123), le composant d'entraînement (1122) et le composant entraîné (1123) étant tous deux disposés dans le deuxième boîtier (1121), dans lequel
le composant d'entraînement (1122) comprend un arbre d'entraînement (11221), un pignon d'entraînement (11224) et un deuxième moteur d'entraînement (11222), dans lequel l'arbre d'entraînement (11221) est disposé dans une direction verticale, une extrémité basse de l'arbre d'entraînement (11221) est raccordée à un arbre de sortie du deuxième moteur d'entraînement (11222), et le pignon d'entraînement (11224) chemise de manière fixe l'arbre d'entraînement (11221) ;
le composant entraîné (1123) comprend un arbre entraîné (11231) et un pignon entraîné (11232), dans lequel l'arbre entraîné (11231) est disposé en parallèle avec l'arbre d'entraînement (11221), le pignon entraîné (11232) chemise de manière fixe l'arbre entraîné (11231), le pignon entraîné (11232) s'engrène avec le pignon d'entraînement (11224), et une extrémité basse de l'arbre entraîné (11231) est raccordée à une extrémité haute de la tige de montage (115) .

8. Équipement de production de zone de laminoir avec dispositif de positionnement d'alignement laser selon la revendication 7, dans lequel le deuxième moteur d'entraînement (11222) est raccordé à un deuxième codeur (11223) ; et/ou
dans lequel une première clavette plate de positionnement (11225) est disposée entre l'arbre d'entraînement (11221) et le pignon d'entraînement (11224), et une deuxième clavette plate de positionnement (11233) est disposée entre l'arbre entraîné (11231) et le pignon entraîné (11232) ; et/ou
dans lequel un premier palier supérieur (11226) et un premier palier inférieur (11227) sont respectivement disposés entre des extrémités haute et basse de l'arbre d'entraînement (11221) et le deuxième boîtier (1121) ; et un deuxième palier supérieur (11234) et un deuxième palier inférieur (11235) sont respectivement disposés entre des extrémités haute et basse de l'arbre entraîné (11231) et le deuxième boîtier (1121).

9. Équipement de production de zone de laminoir avec dispositif de positionnement d'alignement laser selon la revendication 1, dans lequel un rouleau d'apport côté entrée (5) est disposé entre une extrémité de sortie de la table à rouleaux rotatifs côté entrée (1) et le rouleau de laminoir (2), et un rouleau d'apport côté sortie (6) est disposé entre le rouleau de laminoir (2) et une extrémité d'entrée de la table à rouleaux rotatifs côté sortie (3), dans lequel le rouleau d'apport côté entrée (5) et le rouleau d'apport côté sortie (6) sont tous deux composés d'une pluralité de deuxièmes tables à rouleaux disposées côte à côte dans une direction horizontale, un côté de chacune des deuxièmes tables à rouleaux est pourvu d'un deuxième moteur de table à rouleaux par lequel la deuxième table à rouleaux est entraînée en rotation.

10. Équipement de production de zone de laminoir avec dispositif de positionnement d'alignement laser selon la revendication 1 ou 9, comprenant en outre une table à rouleaux de transport côté entrée (4) et une table à rouleaux de transport côté sortie (7), dans lequel une extrémité de sortie de la table à rouleaux de transport côté entrée (4) est raccordée à une extrémité d'entrée de la table à rouleaux rotatifs côté entrée (1), et une extrémité d'entrée de la table à rouleaux de transport côté sortie (7) est raccordée à une extrémité de sortie de la table à rouleaux rotatifs côté sortie (3), dans lequel la table à rouleaux de transport côté entrée (4) et la table à rouleaux de transport côté sortie (7) sont toutes les deux composées d'une pluralité de troisièmes tables à rouleaux disposées côte à côte dans une direction horizontale, un côté de chacune des troisièmes tables à rouleaux est pourvu d'un troisième moteur de table à rouleaux par lequel la troisième table à rouleaux est entraînée en rotation.

11. Chaîne de production de laminage à chaud, comprenant une zone de montage de laminoir, **caractérisée en ce que** la zone de montage de laminoir est pourvue en son sein de l'équipement de production de zone de laminoir avec dispositif de positionnement d'alignement laser selon l'une quelconque des revendications 1 à 10.

12. Chaîne de production de laminage à chaud selon la revendication 11, dans laquelle la zone de montage de laminoir est une zone de laminoir à apport unique pourvue en son sein de l'équipement de production de zone de laminoir avec dispositif de positionnement d'alignement laser.

13. Chaîne de production de laminage à chaud selon la revendication 11 ou 12, dans laquelle la zone de montage de laminoir comprend une zone de laminoir grossier et une zone de laminoir de finition, une extrémité de sortie de la zone de laminoir grossier est raccordée à une extrémité d'entrée de la zone de laminoir de finition, et la zone de laminoir grossier et/ou la zone de laminoir de finition est pourvue en son sein de l'équipement de production de zone de laminoir avec dispositif de positionnement d'alignement laser.
